# EUROPÄISCHE PATENTSCHRIFT

(11) **EP 0 898 104 B1**
(45) Veröffentlichungstag und Bekanntmachung des Hinweises auf die Patenterteilung: **04.12.2002**
(21) Anmeldenummer: 98113959.5
(22) Anmeldetag: 25.07.1998
(51) Int. Cl.: F16K 35/02

(54) **Kugelhahn**
Ball valve
Robinet à tournant sphérique

(30) Priorität: 19.08.1997 DE 19735903
(43) Veröffentlichungstag der Anmeldung: 24.02.1999
(73) Patentinhaber: Klinger AG, 6304 Zug (CH)
(72) Erfinder: Wüllerich, Michael, 65510 Hünstetten (DE); Mellies, Wolfgang, 32758 Detmold (DE)
(74) Vertreter: Sparing - Röhl - Henseler Patentanwälte

(56) Entgegenhaltungen:
- EP-A- 0 284 940
- DE-A- 3 710 981
- GB-A- 914 727
- US-A- 1 967 309
- US-A- 4 770 388
- US-A- 5 709 112

## Beschreibung

Die Erfindung betrifft einen Kugelhahn nach dem Oberbegriff des Anspruchs 1.

Aus US-A-4 770 388 ist ein Kugelhahn mit einem in einem Gehäuse zwischen zwei Endpositionen drehbar angeordneten, kugelförmigen Schaltglied bekannt, welches über einen Handhebel betätigbar ist Der Handhebel weist einen gekröpften Abschnitt auf, längs dem ein als Riegel wirkender Schieber angebracht ist. Der Schieber besitzt einen Vorsprung, der zu Verriegelung in der geschlossenen Ventilposition in eine am Gehäuse vorgesehene Ausnehmung eingreift. Zur Betätigung des Schaltglieds über den Handhebel wird der Schieber längs dessen gekröpftern Abschnitt verschoben, so daß der Vorsprung aus der Ausnehmung herausbewegt wird und der Handhebel in die offene Ventilposition verstellt werden kann. Wird der Schieber dort wieder losgelassen, kann er längs des gekröpften Abschnitts zurückgleiten und in eine weitere am Gehäuse vorgesehene Ausnehmung eingreifen.

Wenn jedoch bei einem solchen Kugelhahn der als Riegel wirkende Schieber nach einem Verschieben aus der Verriegelungsposition nicht wieder in diese Position zurückgleitet, etwa weil er durch Reibung am Handhebel haften bleibt oder wenn er sich infolge der Anordnung des Kugelhahns in horizontaler Lage befindet, tritt keine Verriegelungswirkung ein, so daß die Gefahr einer unbeabsichtigten Verstellung des Handhebels besteht.

Aus GB-A-914 727 und der nicht vorveröffentlichten US-A-5 709 112 sind jeweils Verriegelungsmechanismen für Ventilvorrichtungen bekannt, bei denen eine oder mehrere auf den Riegel wirkende Federn vorgesehen sind. Hierbei handelt es sich jedoch um Druckfedern, die infolge der hierfür notwendigen Führungen und aufgrund ihres durch den Einbau bedingten größeren Raumbedarfs eine kompakte Bauweise verhindern.

Aus EP-A-0 284 940 schließlich ist ein Handhebel bekannt, der insbesondere zur Betätigung einer Klappe oder dgl. in Rohrleitungen dient und ein äußeres, mit einem Rastelement einer Rasteinrichtung verbundenes Hebelteil sowie ein inneres, mit einer Betätigungswelle verbundenes Hebelteil aufweist. An dem inneren Hebelteil greift eine Druckfeder an, die gegen eine Betätigungsklinke drückt, um das äußere Hebelteil in Arretierungsstellung mit der Rasteinrichtung zu bringen. Bei dieser Vorrichtung würde ein auf die Betätigungsklinke versehentlich ausgeübter Stoß schräg in Richtung auf das äußere Hebelteil die Arretierungsstellung lösen und zu einer Verstellung des Handhebels führen.

Aufgabe der Erfindung ist es, einen Kugelhahn nach dem Oberbegriff des Anspruchs 1 zu schaffen, bei dem bei möglichst kompakter Bauweise eine versehentliche Betätigung zuverlässig vermieden wird.

Diese Aufgabe wird entsprechend dem kennzeichnenden Teil des Anspruchs 1 gelöst.

Hierzu ist bei einem Kugelhahn mit einem Gehäuse, in dem ein Schaltglied über eine Schaltwelle zwischen zwei Endpositionen drehbar angeordnet ist, wobei die Schaltwelle über einen Handhebel betätigbar und ein längs des Handhebels verschiebbarer und in mehreren vorbestimmten Stellungen am Gehäuse einrastbarer Riegel vorgesehen ist, der Riegel gegen die Vorspannung einer an der Schaltwelle und an der der Schaltwelle abgekehrten Seite des Riegels angreifenden, von einem im Handhebel vorgesehenen Schlitz aufgenommenen Rückholfeder verschiebbar.

Infolge der Rückholfeder wird bei Loslassen des Riegels in jeder der vorbestimmten Stellungen ein Einrasten des Riegels sichergestellt und damit eine versehentliche Betätigung des Handhebels vermieden. Gleichzeitig entsteht durch die spezielle Anordnung der Rückholfeder kein zusätzlicher Raumbedarf, so daß eine kompakte Bauweise ermöglicht wird.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.

Fig. 1 zeigt einen Kugelhahn im Axialschnitt.

Fig. 2 zeigt eine Draufsicht auf den Kugelhahn von Fig. 1.

Fig. 3 zeigt ein Seitenansicht von rechts auf den Kugelhahn von Fig. 1.

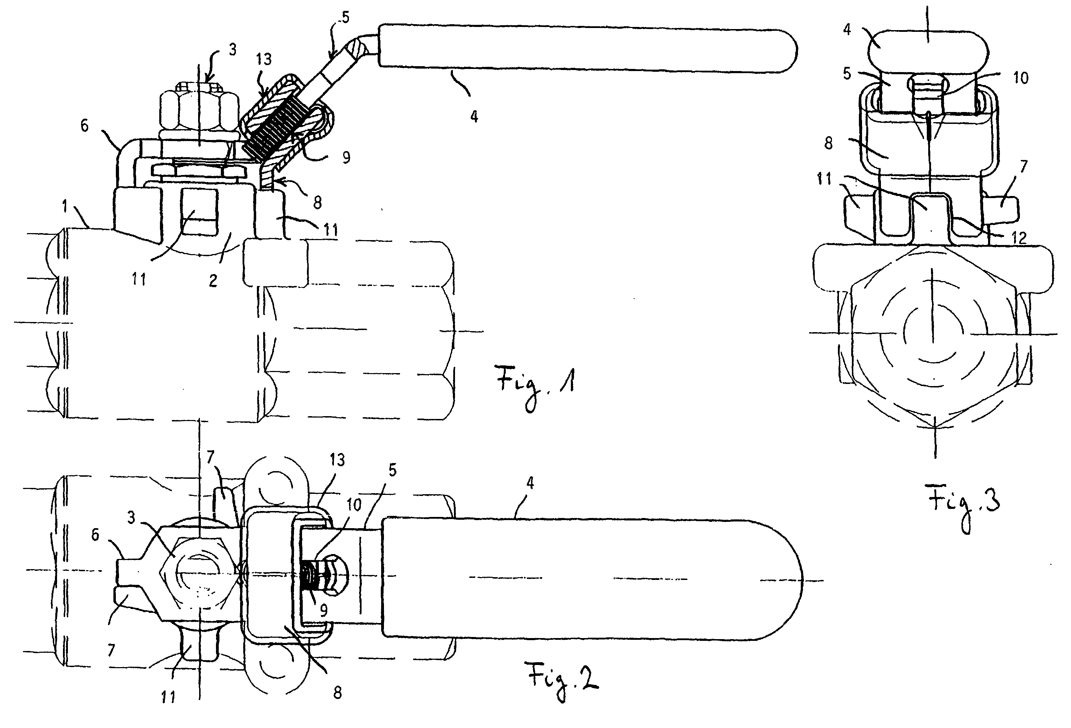

Der in Fig. 1 bis 3 gezeigte Kugelhahn weist ein Gehäuse 1 auf, welches einen Rohrstutzen 2 im Mittelteil senkrecht zur Längsachse des Gehäuses 1 und damit senkrecht zur Durchflußrichtung des Gehäuses 1 enthält. Im Gehäuse 1 ist eine das Schaltglied bildende Kugel (nicht dargestellt) drehbar gelagert. An der Kugel greift eine Schaltwelle 3 an, welche im Rohrstutzen 2 gelagert und nach außen abgedichtet ist. Ein Handhebel 4, der benachbart zur Schaltwelle 3 einen gekröpften Abschnitt 5 aufweist, ist mit einem Ende mit der Schaltwelle 3 verbunden, so daß durch Betätigung des Handhebels 4 die Schaltwelle 3 und damit die Kugel gedreht werden können. Hierbei ist der Handhebel 4 über eine Bohrung auf die Schaltwelle 3 gesetzt und festgeschraubt.

An dem der Schaltwelle 3 benachbarten Ende weist der Handhebel 4 einen gebogenen Abschnitt 6 auf. Am Gehäuse 1 sind außerdem zwei einen Winkel von 90° einschließende Anschläge 7 ausgebildet. Gegen diese Anschläge 7 schlägt der gebogene Abschnitt 6 des Handhebels 4 an, so daß die Drehbewegung der Schaltwelle 3 entsprechend begrenzt ist, wobei die beiden Endpositionen dieser Drehbewegung dem geöffneten bzw. geschlossenen Zustand des Kugelhahns entsprechen.

Der gekröpfte Abschnitt 5 des Handhebel 4 wird von einem Riegel 8 umfaßt, welcher längs des Handhebels 4 verschiebbar ist. Eine Rückholfeder 9 umfaßt mit einem Ende die Schaltwelle 3 und ist dort zwischen Schaltwelle 3 und Handhebel 4 eingeklemmt. An der der Schaltwelle 3 abgekehrten Seite des Riegels 8 ist die Rückholfeder 9 an den Riegel 8 eingehängt. Bei Betätigung des Handhebels 4 bzw. Drehung der Schaltwelle 3 wird die Rückholfeder 9 somit zwischen Handhebel 4 und Schaltwelle 3 mitgeführt. Der gekröpfte Abschnitt 5 des Handhebels 4 weist einen Schlitz 10 auf, der die Rückholfeder 9 aufnimmt. Wenn man den Riegel 8 längs des gekröpften Abschnitts 5 des Handhebels 4 in Richtung des der Schaltwelle 3 abgekehrten Endes des Handhebels 4 verschiebt, erfolgt diese Verschiebung gegen die Vorspannung der Rückholfeder 9. Die Verschiebung wird dabei durch das Ende des Schlitzes 10 begrenzt.

Darüberhinaus sind an zwei Stellen des Gehäuses 1, die den beiden Endpositionen der Schaltwelle 3 entsprechen, zwei Rastvorsprünge 11 ausgebildet. Der Riegel 8 weist an der der Schaltwelle 3 zugekehrten Seite eine Aussparung 12 auf, welche formschlüssig zu den Rastvorsprüngen 11 ausgebildet ist. Befindet sich also der Riegel 8 in einer der beiden Endpositionen, in welcher er mit einem der Rastvorsprünge 11 in Eingriff steht, wird eine Betätigung des Handhebels 4 ohne vorheriges Entsichern verhindert. Zum Entsichern muß der Riegel 8 gegen die Vorspannung der Rückholfeder 9 längs des gekröpften Abschnitts 5 des Handhebels 4 verschoben werden, so daß der Riegel 8 bezüglich des Rastvorsprungs 11 des Riegels 8 freikommt, wodurch der Handhebel 4 betätigbar wird und bis in die Position verdrehbar ist, in der er mit dem weiteren Rastvorsprung 11 wieder verriegelbar ist, in der erneut eine Betätigung des Handhebels 4 ohne vorheriges Entsichern verhindert wird. Eine versehentliche Betätigung des Kugelhahns wird somit vermieden.

Die beschriebene Ausführungsform hat zudem den Vorteil, daß sich die Betätigung des Riegels 8 zum Entsichern des Handhebels 4 und die Betätigung des Handhebels 4 mit einer Hand gleichzeitig ausführen lassen.

Zusätzlich ist der Riegel 8 von einem hülsenartigen Wärme- und Verletzungsschutz 13 umhüllt.

Gegebenenfalls können statt der zwei Rastvosprünge auch mehrere verwendet werden.

Anstelle der dargestellten Rastvorsprünge können auch andere Rastvorrichtungen, etwa Aussparungen, verwendet werden.

## Patentansprüche

1. Kugelhahn mit einem Gehäuse (1), in dem ein Schaltglied über eine Schaltwelle (3) zwischen zwei Endpositionen drehbar angeordnet ist, wobei die Schaltwelle (3) über einen Handhebel (4) betätigbar und ein längs des Handhebels (4) verschiebbarer und in mehreren vorbestimmten Stellungen am Gehäuse (1) einrastbarer Riegel (8) vorgesehen ist, **dadurch gekennzeichnet, daß** der Riegel (8) gegen die Vorspannung einer an der Schaltwelle (3) und an der der Schaltwelle (3) abgekehrten Seite des Riegels (8) angreifenden, von einem im Handhebel (4) vorgesehenen Schlitz (10) aufgenommenen Rückholfeder (9) verschiebbar ist.

2. Kugelhahn nach Anspruch 1, **dadurch gekennzeichnet, daß** der Handhebel (4) gekröpft und der Riegel (8) längs des gekröpften Abschnitts (5) des Handhebels (4) verschiebbar ist.

3. Kugelhahn nach Anspruch 1 oder 2, **dadurch gekennzeichnet, daß** der Riegel (8) mit einem Ende den Handhebel (4) umfaßt.

4. Kugelhahn nach einem der Ansprüche 1 bis 3, **dadurch gekennzeichnet, daß** an den zum Einrasten des Riegels (8) vorbestimmten Stellen des Gehäuses (1) Rastvorsprünge (11) ausgebildet sind.

5. Kugelhahn nach Anspruch 4, **dadurch gekennzeichnet, daß** der Riegel (8) an einem Ende zu den Rastvorsprüngen (11) des Gehäuses (1) eine Aussparung (12) aufweist.

6. Kugelhahn nach einem der Ansprüche 1 bis 5, **dadurch gekennzeichnet, daß** der Riegel (8) zumindest in den beiden Stellungen einrastet, welche dem geöffneten und dem geschlossenen Zusatand des Kugelhahns entsprechen.

7. Kugelhahn nach einem der Ansprüche 1 bis 6, **dadurch gekennzeichnet, daß** der Riegel (8) von einem Wärme- und Verletzungsschutz (13) umhüllt ist.

## Claims

1. Ball valve with a housing (1), in which an operating element, via an operating shaft (3), is arranged rotatably between two end positions, the operating shaft (3) being actuatable via a hand lever (4), and a lock (8) being provided, which is displaceable along the hand lever (4) and can be engaged in a number of predetermined positions on the housing (1), **characterized in that** the lock (8) is displaceable counter to the prestress of a restoring spring (9) which acts on the operating shaft (3) and on that side of the lock (8) facing away from the operating shaft (3) and is received by a slot (10) provided in the hand lever (4).

2. Ball valve according to Claim 1, **characterized in that** the hand lever (4) is cranked and the lock (8) is displaceable along the cranked portion (5) of the hand lever (4).

3. Ball valve according to Claim 1 or 2, **characterized in that** the lock (8) surrounds the hand lever (4) with one end.

4. Ball valve according to one of Claims 1 to 3, **characterized in that** catching projections (11) are designed at the locations of the housing (1) which are predetermined for engaging the lock (8).

5. Ball valve according to Claim 4, **characterized in that** the lock (8) has a cutout (12) at one end towards the catching projections (11) of the housing (1).

6. Ball valve according to one of Claims 1 to 5, **characterized in that** the lock (8) engages at least in the two positions which correspond to the opened and the closed state of the ball valve.

7. Ball valve according to one of Claims 1 to 6, **characterized in that** the lock (8) is covered by a means of protection (13) against heat and damage.

## Revendications

1. Robinet à boisseau sphérique comprenant un corps (1) dans lequel un organe de commande est disposé de manière qu'on puisse le faire tourner entre deux positions extrêmes au moyen d'un arbre de commande (3), l'arbre de commande (3) pouvant être actionné au moyen d'un levier à main (4), et où il est prévu un verrou (8) qu'on peut faire coulisser le long du levier à main (4) et enclenché sur le corps (1) dans plusieurs positions prédéterminées, **caractérisé en ce qu'**on peut faire coulisser le verrou (8) à l'encontre de la précontrainte d'un ressort de rappel (9) qui attaque l'arbre de commande (3) et un côté du verrou (8) qui est éloigné de l'arbre de commande (3), et qui est logé dans une fente (10) prévue dans le levier à main (4).

2. Robinet à boisseau sphérique selon la revendication 1, **caractérisé en ce que** le levier à main (4) est coudé et que le verrou (8) peut coulisser le long du segment coudé (5) du levier à main (4).

3. Robinet à boisseau sphérique selon la revendication 1 ou 2, **caractérisé en ce que** le verrou (8) entoure le levier à main (4) à une extrémité.

4. Robinet à boisseau sphérique selon l'une des revendications 1 à 3, **caractérisé en ce que** des saillies d'enclenchement (11) sont formées aux endroits du corps (1) qui sont prédéterminés pour l'enclenchement du verrou (8).

5. Robinet à boisseau sphérique selon la revendication 4, **caractérisé en ce que** le verrou (8) présente un évidement (12) à une extrémité dirigée vers les saillies d'enclenchement (11) du corps (1).

6. Robinet à boisseau sphérique selon l'une des revendications 1 à 5, **caractérisé en ce que** le verrou (8) s'enclenche au moins dans les deux positions qui correspondent à l'état ouvert et à l'état fermé du robinet à boisseau sphérique.

7. Robinet à boisseau sphérique selon l'une des revendications 1 à 6, **caractérisé en ce que** le verrou (8) est entouré d'une protection (13) contre la chaleur et les blessures.
